# FASCICULE DE BREVET EUROPEEN

(11) **EP 1 225 738 B1**
(45) Date de publication et mention de la délivrance du brevet: **02.04.2008**
(21) Numéro de dépôt: 02290161.5
(22) Date de dépôt: 23.01.2002
(51) Int. Cl.: H04L 25/497, H04L 25/03, H04L 27/34

(54) **Modem adaptatif bidirectionnel avec un ensemble de filtrage commun aux chaînes d'émission et de réception et agencé pour fonctionner à l'alternat**
Adaptives bidirektionales Modem, mit gemeinsamen Filtermitteln für die Sende- und Empfangseinrichtungen und angeordnet um wechselweise zu funktionieren
Adaptive bidirectional modem with filtering means common to the emission and the reception blocks and arranged to operate alternately

(30) Priorité: 23.01.2001 FR 0100865
(43) Date de publication de la demande: 24.07.2002
(73) Titulaire: SAGEM Communication, 75015 Paris (FR)
(72) Inventeur: Boulanger, Christophe, 75013 Paris (FR); Lamy, Francois, 75013 Paris (FR); Lesaulnier, Marcel, 75013 Paris (FR)
(74) Mandataire: Bloch, Gérard

(56) Documents cités:
- EP-A- 0 529 986
- US-A- 5 881 108
- US-A- 5 881 363

## Description

La présente invention concerne la transmission de signaux de données par un modem sur une liaison présentant des distorsions de propagation des signaux.

La liaison qui sert à transmettre des signaux numériques entre deux modems, sous la forme de symboles successifs représentant un bloc de bits de valeur particulière, est en général imparfaite et propage les composantes fréquentielles de chaque signal à des vitesses différentes et/ou les atténue différemment. La forme d'un symbole émis est donc altérée par la transmission et, en particulier, chacun des symboles successifs, de période prédéterminée, tend à s'élargir et donc déborde temporellement sur les symboles adjacents et les déforme.

Il faut donc prévoir, à la mise en service de la liaison, une phase d'apprentissage dans laquelle le modem récepteur estime la distorsion des premiers symboles reçus et corrige progressivement en conséquence les suivants, par un filtrage adaptatif d'égalisation, jusqu'à ce que chaque symbole reçu retrouve parfaitement, par une égalisation bien adaptée, sa forme nominale d'origine qui est ainsi reconnue sans erreur.

L'adaptation du filtrage s'effectue en faisant évoluer des coefficients de filtrage agissant sur des étages, traversés par des échantillons de chaque symbole, de multiplication respectifs en cascade d'un filtre numérique, de façon à tendre vers un minimum d'une fonction d'erreur représentant l'écart de forme du symbole filtré par rapport à celui, des symboles nominaux possibles attendus, qui présente a priori la même signification numérique, c'est-à-dire celui qui ressemble le plus au symbole reçu.

Ces coefficients de pondération des échantillons respectifs représentent donc, après adaptation ou stabilisation, la distorsion de la liaison pour la vitesse de transmission et le type de modulation considérés.

On pourrait continuer à utiliser ces coefficients pour la réception de symboles utiles, afin de poursuivre le filtrage avec rétroaction adaptative ci-dessus, mais une erreur de décision dans la reconnaissance d'un symbole n'est toutefois pas à exclure et elle perturberait le filtrage et donc la reconnaissance des symboles suivants. On préfère donc figer les coefficients de filtrage et les transmettre à l'émetteur pour qu'il applique, aux symboles utiles qu'il va émettre, une contre-distorsion opposée à celle que va apporter la liaison. Le filtrage en réception des symboles utiles est donc alors quasiment superflu.

Le modem doit donc comporter un filtre adaptatif d'égalisation en réception, pour mesurer, par élimination, la distorsion des symboles d'apprentissage déterminant les valeurs optimales des coefficients de pondération, et comporter un filtre homologue en émission, pour introduire la contre-distorsion de précodage des symboles utiles. Cela représente un volume et/ou une puissance de calcul et donc un coût relativement importants.

Un tel modem est décrit dans US 5 881 363.

La présente invention vise à simplifier un tel modem.

A cet effet, l'invention concerne tout d'abord un modem adaptatif bidirectionnel selon la revendication 1.

Ainsi, le modem selon l'invention peut échanger des données ou symboles de mise en service d'une liaison avec un modem distant, classique ou aussi selon l'invention, pour adapter la réception des données qu'il reçoit ou qu'il émet. Cette adaptation soit utilise alors l'ensemble de filtrage du modem de l'invention en réception avec retour de décision, soit elle ne l'utilise pas si c'est le modem de l'invention qui émet les symboles de test de forme nominale pour l'adaptation du modem distant. Ensuite, en exploitation, l'ensemble de filtrage sert uniquement à l'émission, le filtrage étant commandé en fonction des paramètres de réception déterminés précédemment par ce même ensemble de filtrage ou reçus du modem distant.

L'invention concerne aussi un procédé de mise en service et d'utilisation d'une liaison bidirectionnelle de transmission de signaux de symboles numériques selon la revendication 6.

L'invention sera mieux comprise à l'aide de la description suivante d'un mode préféré de mise en oeuvre du procédé de l'invention et d'un modem pour la mise en oeuvre de ce procédé, en référence au dessin annexé, sur lequel :
- la figure 1 représente, sous forme de blocs fonctionnels, un canal de transmission de symboles de données reliant deux modems selon l'invention,
- la figure 2 représente un bloc de codage de symboles à émettre,
- la figure 3 illustre la structure d'un ensemble de filtrage d'égalisation de symboles reçus dans l'un des modems, et
- la figure 4 représente les détails de l'ensemble de filtrage à l'alternat selon l'invention.

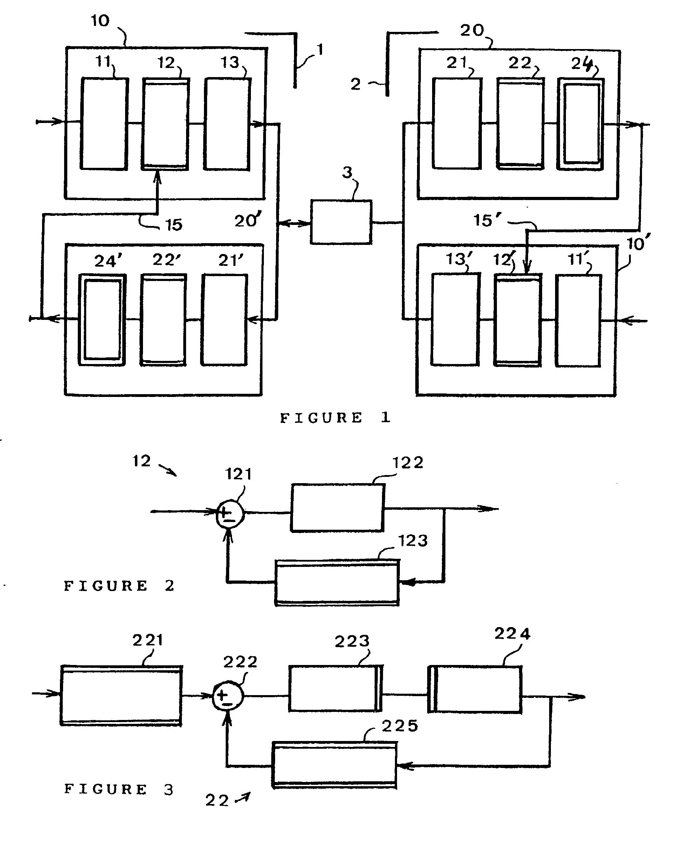

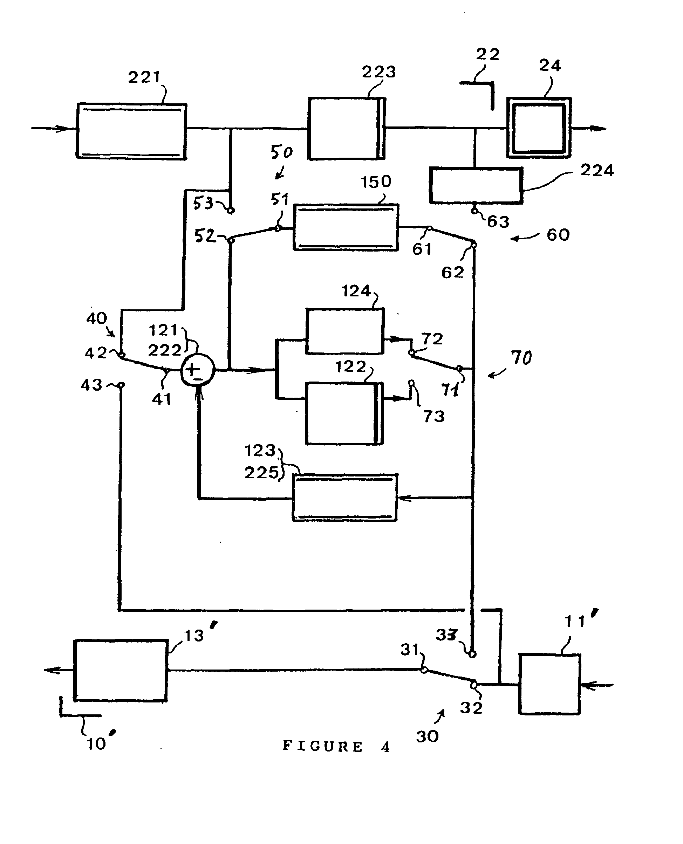

Sur la figure 1, un modem 2 selon l'invention est relié à un modem 1, aussi selon l'invention dans cet exemple, par un canal ou liaison de transmission de données 3 qui est ici une paire torsadée de fils téléphoniques de ligne d'abonné à haut débit, bien adaptée pour les échanges de données à travers l'Internet. Il s'agit ici d'une transmission selon la norme SDSL, de boucle d'abonné symétrique. La figure 1 vise à illustrer les fonctions d'adaptation ou égalisation classiques pour les échanges de données, l'invention étant mise en évidence sur la figure 3 et surtout la figure 4.

Le modem 1 comporte une chaîne 10 d'émission de données reliée par la liaison 3 à une chaîne correspondante 20 de réception des données, appartenant au modem 2. La chaîne d'émission 10 comprend un bloc 11 de codage et modulation de données à émettre, sous forme de signaux de symboles numériques représentant chacun les états logiques d'un nombre déterminé de bits à émettre en bloc. Le bloc 11 est suivi d'un bloc fonctionnel de précodage 12, à fonctionnement optionnel commandé, relié à la liaison 3 par un bloc 13 de conversion numérique/analogique et d'interface d'adaptation physique, ou analogique, d'un émetteur des signaux de symbole aux caractéristiques de la ligne de liaison 3, comme par exemple son impédance caractéristique.

La chaîne 20 de réception des données comporte un bloc 21 de conversion analogique/numérique et d'interface d'adaptation physique des signaux de symbole de ligne, suivi d'un bloc fonctionnel égaliseur 22 relié en aval à un bloc de décodage et décision 24, ici un décodeur de Viterbi.

La figure 2 représente plus en détails le bloc 12 de précodage des signaux de symbole à émettre. Les bits de données à émettre sont appliqués à l'entrée positive d'un soustracteur 121 relié en sortie à un bloc opérateur modulo, référencé 122, fournissant une suite correspondante de symboles. La sortie du bloc opérateur modulo référencé 122 est en outre rebouclée sur l'entrée négative du soustracteur 121 à travers un bloc fonctionnel de rétroaction à filtrage transversal 123.

La figure 3 représente les détails du bloc 22 d'égalisation des signaux de symbole reçus. Il comporte en tête un bloc de filtrage transversal d'adaptation 221 relié en sortie à l'entrée positive d'un soustracteur 222 dont la sortie est reliée, à travers un bloc opérateur modulo de démodulation symbole, référencé 223, à l'entrée d'un bloc 224 de détermination de tranches de niveau de tension, ou comparateur à seuil(s), désigné classiquement par le terme anglais " slicer ", fournissant un signal analogique qui représente un état logique de symbole parmi une échelle d'états ou niveaux logiques nominaux de symboles possibles et attendus. La sortie du bloc comparateur 224 commande le bloc de décodage et de décision 24. Cette même sortie est en outre reliée à l'entrée d'un bloc de filtrage transversal adaptatif de rétroaction 225, encore appelé filtre aval de retour de décision, relié en sortie à l'entrée négative du soustracteur 222.

La liaison 3, étant ici bidirectionnelle, le modem 1 comporte une chaîne de réception de données 20' semblable à la chaîne 20 et le modem 2 comporte une chaîne d'émission de données 10' semblable à la chaîne 10. Dans les chaînes 10' et 20', les blocs fonctionnels portent la même référence que le bloc homologue de la chaîne 10, respectivement 20, avec en plus l'indice " prime ".

La liaison interne 15 (15'), entre les chaînes 10, 20' (10', 20), illustre le fait que la sortie de la chaîne de réception 20' (20) commande une entrée d'activation et de réglage du bloc de précodage 12 (12').

Le processus de mise en service de la liaison est classique et connu sous le nom de principe de Tomlinson-Harashima. On le rappelle brièvement ci-dessous.

Pour mettre en service une liaison logique à travers la ligne de liaison 3, dans le sens allant du modem 1 vers le modem 2 par exemple, on effectue tout d'abord une phase d'apprentissage dans laquelle on sonde la liaison 3 en y émettant des séquences prédéterminées de symboles de test et on détermine la distorsion des symboles reçus, qui caractérise la liaison 3. Dans cette phase, le bloc de précodage 12 d'émission est transparent et le filtre de rétroaction aval 225 en réception est actif. Les divers étages en cascade, de retard, du bloc de filtrage transversal aval 225 sont commandés par un ensemble de coefficients multiplicatifs, de pondération, pondérant des échantillons du symbole reçu actuel stockés dans des étages respectifs, les échantillons pondérés étant ensuite additionnés pour représenter la valeur d'une fonction de correction ou compensation de distorsion appliquée au soustracteur 222. Par le rebouclage des blocs 222, 223, 224 et 225, l'état du bloc de filtrage 225, défini par ces coefficients, converge vers une valeur asymptotique optimale de la fonction de correction pour laquelle le bloc de filtrage 225 compense, ou annule sensiblement, la distorsion induite par la ligne de liaison 3.

Après une durée déterminée d'apprentissage, le jeu de coefficients de filtrage est considéré comme ayant suffisamment convergé vers le jeu optimal d'asymptote et sa valeur est alors figée et mémorisée.

Dans une phase intermédiaire suivante, la valeur figée du jeu de coefficients est transmise à la chaîne d'émission 10 du modem émetteur 1, par les chaînes 10' et 20'. Par la liaison interne 15, le bloc précodeur 12 est alors activé et réglé, c'est-à-dire que le bloc fonctionnel de filtrage 123 est commandé en fonction des coefficients reçus du modem 2, récepteur des symboles de test, pour que le modem 1 applique, aux symboles à émettre, une prédistorsion, ou contre-distorsion, représentant une transformation inverse de la distorsion qui a été mesurée en réception. Dans cette situation, de précompensation de la distorsion de la ligne de liaison 3, le bloc de filtrage 225 du modem récepteur 2 est alors quasiment inutile et est donc désactivé, le filtre de tête 221 assurant la compensation du résidu de distorsion et des dérives de celui-ci.

La liaison 3 est alors en service et une transmission de symboles de données utiles peut alors avoir lieu dans le sens indiqué. Pour la mise en service dans l'autre sens, on procède de même ou, si la distorsion de ligne est supposée être la même dans les deux sens, le modem récepteur 2 commande lui-même, localement, le filtre 123' de son précodeur 12' à partir des coefficients optimaux de son bloc de filtrage de rétroaction en réception 225.

La présente invention prévoit, dans le modem 2, un ensemble bifonctionnel de filtrage, commun aux chaînes d'émission 10' et de réception 20, fonctionnant à l'alternat pour traiter les fonctions des blocs de filtrage 123' et 225. De préférence comme ici, le modem 1 est identique au modem 2 de l'invention et comporte donc un tel ensemble bifonctionnel. La qualification de bifonctionnel est liée au fait que cet ensemble fonctionne, au choix, en émission ou en réception, même si sa fonction de base, le filtrage, est unique.

La figure 4 représente plus en détails le modem 2 et en particulier des moyens de commutation ou basculement du fonctionnement de l'ensemble ou bloc de filtrage commun.

Dans la chaîne d'émission 10', les bits à émettre sous forme de symboles par le bloc d'interface 13' sont appliqués au bloc de codage 11'. Le bloc d'interface 13' est relié en entrée à la borne de sortie commune 31 d'un commutateur ou aiguilleur 30 à 2 voies ou bornes, dont une borne 32, d'émission sans précodage, est reliée en sortie du bloc de codage 11'. Une borne 33, d'émission avec précodage, de l'aiguilleur 30 permet d'insérer l'ensemble de filtrage entre les blocs 11' et 13'.

Les liaisons internes représentées sont soit de type série soit de type parallèle, éventuellement sous forme de bus commun à plusieurs blocs fonctionnels.

Pour la clarté du dessin, l'aiguilleur 30 et les autres 40, 50, 60, 70 mentionnés plus loin sont représentés sous la forme d'un contact de relais à deux positions. En pratique, on préfère utiliser des portes analogiques en circuit intégré. Dans tous ces aiguilleurs, les bornes ont une référence dont la dizaine est celle de l'aiguilleur, le chiffre des unités valant 1 pour la borne commune, valant 2 pour la borne active lorsque l'ensemble de filtrage est inséré dans la chaîne de réception 20 et valant 3 pour la borne active lorsque cet ensemble est inséré dans la chaîne d'émission 10', pour un précodage.

Ci-après, les bornes en parallèle des divers aiguilleurs, comme 32 et 33, sont respectivement appelées borne de réception et borne d'émission, ces qualifications désignant uniquement l'état des connexions, pour le filtrage en émission ou en réception, indépendamment du fait que la borne considérée est une entrée ou bien une sortie de signal de l'aiguilleur considéré.

Le bloc de filtrage de cet ensemble, portant la double référence 123', 225, commande l'entrée négative du soustracteur à double référence 121', 222 dont l'entrée positive est reliée à la borne commune 41 de l'aiguilleur 40 dont la borne d'émission 43 est reliée à la borne de réception 32 de l'aiguilleur 30.

La sortie du filtre de tête 221, reliée au bloc opérateur modulo référencé 223, est en outre reliée à la borne de réception 42 de l'aiguilleur 40 ainsi qu'à la borne d'émission 53 de l'aiguilleur 50.

Un bloc 150, à algorithme de calcul d'adaptation des coefficients de pondération du bloc de filtrage 123', 225, est relié, d'un côté, à la borne commune 51 de l'aiguilleur 50 et, d'un autre, à la borne commune 61 de l'aiguilleur 60, dont la borne d'émission 63 est reliée, à travers le bloc comparateur 224, à la liaison reliant la sortie du bloc opérateur modulo référencé 223 au bloc de décodage et décision 24.

La borne 62 de l'aiguilleur 60 est reliée à l'entrée du bloc de filtrage 123', 225, à la borne d'émission 33 ainsi qu'à la borne commune 71 de l'aiguilleur 70.

La liaison reliant la sortie du soustracteur 121', 222, à l'opérateur modulo référencé 122' est en outre reliée à la borne de réception 52 ainsi qu'à l'entrée d'un bloc 124' de traitement de signe.

Les bornes de réception 72 et d'émission 73 sont respectivement reliées en sortie du bloc de traitement de signe 124' et du bloc 122' opérateur modulo.

Le bloc 150 est donc soit branché en parallèle sur le bloc 223 opérateur modulo et le bloc 224, à travers les bornes d'émission 53 et 63, soit relié, d'un côté, à la sortie du soustracteur 121', 222 par la borne 52 et, de l'autre, à l'entrée du bloc de filtrage 123', 225 par la borne 62.

Le fonctionnement à l'alternat de l'ensemble de filtrage va maintenant être expliqué.

La figure 4 représente l'état, dit de réception, des aiguilleurs, pour lequel la borne commune est reliée à la borne de réception, à référence paire (2), les blocs 11' et 13' de la chaîne d'émission sont reliés directement par les bornes 31, 32.

Le signal à émettre, qui est aussi dérivé vers la borne d'émission 43, ne peut se propager plus loin par cette dérivation puisqu'elle est isolée.

Le soustracteur 121', 222 reçoit le signal issu du bloc de filtrage de tête 221 à travers la borne de réception 42 et le bloc de signe 124' est mis en service à travers la borne 72 et commande donc le bloc de filtrage 123', 225. La sortie du soustracteur 121', 222 commande en outre le bloc à algorithme 150, à travers la borne 52, celui-ci fournissant au bloc de filtrage 123', 225, par la borne 62, de nouvelles valeurs de coefficients de pondération, actualisées d'après les signaux de sortie du soustracteur 121', 222.

On retrouve ainsi le schéma de filtrage adaptatif en réception expliqué plus haut.

Si par contre la borne commune des aiguilleurs est reliée à la borne d'émission associée, à référence impaire (3), le signal à émettre est précodé par l'ensemble du bloc de filtrage 123', 225 associé à l'opérateur 122' modulo d'émission selon la figure 2. Le signal à émettre parvient au soustracteur 121', 222 à travers la borne d'émission 43 et traverse donc le bloc 122' opérateur modulo d'émission. La sortie de ce dernier est alors reliée, par la borne d'émission 73, au bloc de filtrage 123', 225 et au bloc d'interface 13' par la borne d'émission 33.

Le bloc à algorithme 150 est alors en parallèle sur le bloc 223 opérateur modulo de réception et le bloc comparateur 224, par les bornes 53 et 63, pour traiter les signaux de symboles reçus et adapter le bloc de filtrage de tête 221.

Le bloc à algorithme 150 comporte une mémoire vive tampon pour conserver les deux jeux de valeurs de paramètres d'adaptation, en émission et en réception, pour en particulier transmettre les paramètres de distorsion en réception au bloc de précodage 12 du modem associé 1, avant de basculer son fonctionnement en mode émission de symboles utiles vers le modem 1. Cette transmission s'effectue à travers la chaîne de réception 20' et la liaison interne 15, en vue de la transmission de données utiles vers le modem 2.

Comme expliqué au début, le passage d'un mode à l'autre de l'ensemble commun de filtrage est commandé par un bloc séquenceur, non représenté, traitant les différentes phases de mise en service de la liaison 3.

## Revendications

1. - Modem adaptatif bidirectionnel comportant une chaîne (20) de réception de signaux de symboles numériques comprenant un bloc (221) de filtrage de tête, d'égalisation des symboles reçus, des moyens (222) d'adaptation de symboles reçus, agencés pour commander des moyens de décision (223, 224) prévus pour commander en retour les moyens d'adaptation (222), à travers des moyens (225) de filtrage aval de retour de décision, et comportant une chaîne (10') d'émission de symboles numériques comprenant des moyens de filtrage (122, 123) pour précoder les symboles à émettre, modem **caractérisé par le fait que** les moyens de filtrage en réception (225) et les moyens de filtrage en émission (122, 123), sont constitués par un ensemble de filtrage (30, 40, 50, 60, 70, 121, 222, 123, 225, 124, 150) commun aux deux chaînes (10' ; 20) et agencé pour fonctionner à l'alternat, l'ensemble de filtrage comportant un bloc (150) de traitement d'un algorithme d'adaptation du filtrage commandé pour traiter les signaux de symboles reçus et adapter le bloc de filtrage de tête (221) en réception et permettre aux moyens de filtrage et de précodage (123, 225) de précoder le signal à émettre.

2. - Modem selon la revendication 1, dans lequel le bloc de traitement d'algorithme (150) est commandé par un bloc séquenceur traitant les phases de mise en service d'une liaison (3) de transmission de données reliant le modem à un autre.

3. - Modem selon l'une des revendications 1 et 2 dans lequel le bloc de traitement d'algorithme (150) est agencé pour commander à l'alternat le bloc (221) de filtrage de tête et les moyens (123, 225) de précodage de symboles à émettre.

4. - Modem selon l'une des revendications 1 à 3, dans lequel le bloc de traitement d'algorithme (150) comporte une mémoire pour conserver les jeux de valeurs de paramètres d'adaptation en émission et en réception.

5. - Modem selon l'une des revendications 1 à 4, comportant une liaison interne (15) pour transmettre des paramètres de distorsion en réception vers les moyens de précodage (123, 225) avant de basculer son fonctionnement en mode émission.

6. - Procédé de mise en service et d'utilisation d'une liaison bidirectionnelle (3) de transmission de signaux de symboles numériques reliant un modem (2), comportant un ensemble de filtrage commun selon la revendication 1, à un modem quelconque (1), procédé dans lequel :
- le modem quelconque (1) émet des symboles de test de forme nominale,
- le bloc de traitement d'algorithme (150) du modem opposé (2) ayant été commandé pour fonctionner en réception, le modem opposé (2) y reçoit et filtre les symboles de test pour déterminer et mémoriser un ensemble de coefficients de correction de distorsion de la liaison (3) et
- le bloc de traitement d'algorithme (150) du modem opposé (2) transmet les coefficients au modem quelconque (1), qui les mémorise, pour effectuer un précodage de contre-distorsion sur des symboles utiles suivants à émettre, et on fait basculer en émission le fonctionnement de bloc de traitement d'algorithme (150) pour effectuer sur les filtres en émission (122, 123) un précodage de contre distorsion avant d'émettre des symboles utiles.

7. - Procédé selon la revendication 6, dans lequel le modem quelconque (1) comportant aussi un ensemble de filtrages commun (150, 221, 225, 122, 123), celui-ci est commandé, en fonction des coefficients fournis par le modem opposé (2), pour l'émission de symboles utiles.

## Claims

1. Adaptive bidirectional modem comprising a channel (20) for receiving digital symbol signals comprising a front filtering block (221) for equalisation of received symbols, means (222) for adapting received symbols, arranged to control decision means (223, 224) which are provided to control on return the adaptation means (222), through means (225) for downstream filtering of the return decision, and comprising a channel (10') for emitting digital symbols comprising filtering means (122, 123) in order to pre-code the symbols to be transmitted, said modem being **characterised in that** the filtering means in reception (225) and the filtering means in transmission (122, 123) are formed by a filtering assembly (30, 40, 50, 60, 70, 121, 222, 123, 225, 124, 150) which is common to the two channels (10'; 20) and arranged to function alternately, the filtering assembly comprising a block (150) for processing an adaptation algorithm of the filtering controlled in order to process the received symbol signals and to adapt the front filtering block (221) in reception and to allow the filtering and pre-coding means (123, 225) to pre-code the signal to be transmitted.

2. Modem according to claim 1, in which the algorithm processing block (150) is controlled by a sequential block which processes the phases for putting in service a link (3) for transmitting data connecting the modem to another.

3. Modem according to one of the claims 1 and 2, in which the algorithm processing block (150) is arranged in order to control alternately the front filtering block (221) and the means (123, 225) for pre-coding symbols to be transmitted.

4. Modem according to one of the claims 1 to 3, in which the algorithm processing block (150) comprises a memory for saving the range of values of adaptation parameters in transmission and in reception.

5. Modem according to one of the claims 1 to 4, comprising an internal link (15) for transmitting distortion parameters in reception to the pre-coding means (123, 225) before switching its operation into transmission mode.

6. Method for putting in service and using a bidirectional link (3) for transmission of digital symbol signals connecting a modem (2), comprising a common filtering assembly according to claim 1, to whichever modem (1), a method in which:
- whichever modem (1) transmits test symbols of a nominal form,
- the algorithm processing block (150) of the opposite modem (2) having been controlled to function in reception, the opposite modem (2) receives there and filters the test symbols in order to determine and memorise an assembly of coefficients for correction of distortion of the link (3) and
- the algorithm processing block (150) of the opposite modem (2) transmits the coefficients to whichever modem (1) which memorises them in order to effect a counter-distortion pre-coding on the following useful symbols to be transmitted and the operation of the algorithm processing block (150) is switched to transmission in order to effect on the filters in transmission (122, 123) a counter-distortion pre-coding before transmitting the useful symbols.

7. Method according to claim 6, in which when whichever modem (1) also comprises a common filtering assembly (150, 221, 225, 122, 123), the latter is controlled, as a function of the coefficients provided by the opposite modem (2), for transmission of useful symbols.

## Patentansprüche

1. Bidirektionales adaptives Modem, umfassend eine Kette (20) zum Empfang von Signalen von digitalen Symbolen, umfassend einen Kopffilterblock (221) zur Entzerrung der empfangenen Symbole, Mittel (222) zur Anpassung von empfangenen Symbolen, die dafür ausgebildet sind, Entscheidungsmittel (223, 224) zu steuern, die dafür vorgesehen sind, die Anpassungsmittel (222) über ausgangsseitige Entscheidungsrückkehr-Filtermittel (225) rückzusteuern, und umfassend eine Kette (10') zum Senden von digitalen Symbolen, umfassend Filtermittel (122, 123) zur Vorcodierung der zu sendenden Symbole, wobei das Modem **dadurch gekennzeichnet ist, dass** die Empfangs-Filtermittel (225) und die Sendungs-Filtermittel (122, 123) aus einer den beiden Ketten (10'; 20) gemeinsamen Filtereinheit (30, 40, 50, 60, 70, 121, 222, 123, 225, 124, 150) bestehen, die dafür ausgebildet ist, im Wechselbetrieb zu arbeiten, wobei die Filtereinheit einen Block (150) zur Verarbeitung eines Algorithmus zur Anpassung der Filterung umfasst, der gesteuert wird, um die empfangenen Symbolsignale zu verarbeiten und den Empfangs-Kopffilterblock (221) anzupassen und den Filter- und Vorcodierungsmitteln (123, 225) zu gestatten, das zu sendende Signal vorzucodieren.

2. Modem nach Anspruch 1, bei dem der Block (150) zur Algorithmusverarbeitung durch einen Sequenzierblock gesteuert wird, der die Phasen der Inbetriebnahme einer Datenübertragungsverbindung (3) verarbeitet, die das Modem mit einem anderen verbindet.

3. Modem nach einem der Ansprüche 1 und 2, bei dem der Block (150) zur Algorithmusverarbeitung dafür ausgebildet ist, den Kopffilterblock (221) und die Mittel (123, 225) zur Vorcodierung von zu sendenden Symbolen im Wechselbetrieb zu steuern.

4. Modem nach einem der Ansprüche 1 bis 3, bei dem der Block (150) zur Algorithmusverarbeitung einen Speicher umfasst, um die Sätze von Werten von Anpassungsparametern bei Sendung und bei Empfang aufzubewahren.

5. Modem nach einem der Ansprüche 1 bis 4, umfassend eine innere Verbindung (15) zum Übertragen der Empfangs-Verzerrungsparameter zu den Vorcodierungsmitteln (123, 225) vor Kippen seines Betriebs in den Sendemodus.

6. Verfahren zur Inbetriebnahme und Verwendung einer bidirektionalen Verbindung (3) zur Übertragung von Signalen von digitalen Symbolen, die ein Modem (2), das eine gemeinsame Filtereinheit nach Anspruch 1 umfasst, mit einem beliebigen Modem (1) verbindet, wobei bei diesem Verfahren:
- das beliebige Modem (1) Testsymbole von nominaler Form sendet,
- wenn der Algorithmusverarbeitungsblock (150) des entgegengesetzten Modems (2) so gesteuert wurde, dass er in Empfang arbeitet, das entgegengesetzte Modem (2) die Testsymbole empfängt und filtert, um eine Einheit von Koeffizienten zur Korrektur der Verzerrung der Verbindung (3) zu bestimmen und zu speichern, und
- der Algorithmusverarbeitungsblock (150) des entgegengesetzten Modems (2) die Koeffizienten zu dem beliebigen Modem (1) überträgt, das sie speichert, um eine Gegenverzerrungsvorcodierung an den folgenden zu sendenden Nutzsymbolen vorzunehmen, und den Betrieb des Algorithmusverarbeitungsblock (150) in Sendung kippen lässt, um an den Sendungsfiltern (122, 123) vor der Sendung der Nutzsymbole eine Gegenverzerrungsvorcodierung vorzunehmen.

7. Verfahren nach Anspruch 6, bei dem, wenn das beliebige Modem (1) auch eine gemeinsame Filtereinheit (150, 221, 225, 122, 123) umfasst, diese in Abhängigkeit von den von dem entgegengesetzten Modem (2) gelieferten Koeffizienten für die Sendung von Nutzsymbolen gesteuert wird.
